# EUROPÄISCHE PATENTANMELDUNG

(11) **EP 0 548 530 A1**
(43) Veröffentlichungstag der Anmeldung: **30.06.1993**
(21) Anmeldenummer: 92119504.6
(22) Anmeldetag: 14.11.1992
(51) Int. Cl.: H01B 13/00, H02G 1/08

(54) **Flechtschlauch zur Ummantelung von Stranggut**

(30) Priorität: 21.11.1991 DE 4138215
(71) Anmelder: Dewit, Robert, D-51381 Leverkusen (DE)
(72) Erfinder: Dewit, Robert, D-51381 Leverkusen (DE)
(74) Vertreter: Peerbooms, Rudolf, Dipl.-Phys.

(57) **Zusammenfassung**

Gezeigt und beschrieben ist ein Flechtschlauch (1) zur Ummantelung von Stranggut (3), z. B. von Kabelbäumen, welcher durch Stauchen im Durchmesser elastisch aufweitbar ist, sowie ein Verfahren zum Aufbringen des Flechtschlauches auf das Stranggut.

Zur Vereinfachung des Aufbringens des Flechtschlauches und zur Einsparung von Montagezeit ist der Flechtschlauch (1) mit einer losen, beim Flechten des Schlauches bereits eingebrachten Seele (2) als Montagehilfe versehen, welche mit einem Befestigungs-Stück (6) am Aufschubende (7) des Stranggutes (3) befestigbar ist. Unter Festhalten des anderen Endes (13) der Seele (2) wird der Schlauch (1) vom rückwärtigen Ende (11) her gegen das Aufschubende (7) gestaucht und dabei so weit aufgeweitet, bis der Schlauch über das Aufschubende (7) hinweg auf das Stranggut (3) schnellt.

## Beschreibung

Die Erfindung betrifft einen Flechtschlauch zur Ummantelung von Stranggut, z. B. Kabelbäumen, welcher durch Stauchen im Durchmesser elastisch aufweitbar ist.

In der Praxis werden vielfach Kabel, Kabelbündel, Kabelbäume oder auch Leitungsrohre und -schläuche für Medien mit einem Flechtschlauch ummantelt, um einen mechanischen Schutz oder eine thermische Isolierung für das jeweilige Stranggut zu erreichen. Die Flechtschläuche bestehen überwiegend aus Polyester-Monofilen oder Gemischen aus Polyester- und Polyamid-Monofilen oder aus Glasfasern oder Metallfäden und werden durch Klöppeln als sogenanntes "Maibaumtanzgeflecht" hergestellt. Eine besondere Eigenschaft dieser Flechtschläuche besteht darin, daß sie in erheblichem Umfange, beispielsweise bis auf ein Viertel ihrer Länge, gestaucht werden können und daß sie dabei eine erhebliche Aufweitung ihres Durchmessers, meist auf mehr als das Doppelte, erfahren. Aufgrund der Elastizität des verwendeten Materiales haben gestauchte Flechtschläuche die Tendenz, sich selbsttätig wieder zu strecken und dabei sich auf ihren ursprünglichen Durchmesser wieder zu verengen. Hierdurch ist es möglich, einen Flechtschlauch, der einen kleineren Innendurchmesser als der Außendurchmesser des Stranggutes aufweist, mit strammem Sitz auf ein Stranggut aufzubringen.

Nach üblicher Montagepraxis wird ein Flechtschlauch von der Länge des zu ummantelnden Stranggutes zunächst auf ein an einem Ende angespitztes Staurohr unter Stauchung und Aufweitung aufgeschoben, anschließend wird das Stranggut mit einem Endabschnitt in das Staurohr eingesteckt und dann an dieser Seite der gestauchte Flechtschlauch freigegeben, welcher unter Streckung über das Stranggut schnellt. Danach wird das Staurohr vom eingesteckten Stranggutende abgezogen. Dieses bekannte Montageverfahren ist allerdings sehr zeitaufwendig. Darüber hinaus ist bei diesem Verfahren die Sicherung des gestauchten Flechtschlauches auf dem Staurohr kritisch, da ein vorzeitiges Abschnellen des Schlauches, d. h. vor ordnungsgemäßem Einschieben des Stranggutes in das Staurohr, unbedingt vermieden werden muß.

Durch die DE-PS 49 09 19 ist ein Verfahren zur Herstellung von Schlauchgeflecht, insbesondere zur Weiterverarbeitung von Isolationsmaterial für elektrotechnische Zwecke, bekannt, bei dem in den Mantel des aus unelastischen Textilfäden bestehenden Schlauchgeflechtes elastische Fäden, z. B. Gummifäden, als Stengelfäden in gespanntem Zustand eingearbeitet werden, durch die das Schlauchgeflecht beim Verlassen der Maschine so zusammengezogen wird, daß es außer einer größeren lichten Weite und Dichte auch eine runde Querschnittsform erhält. Ein derart hergestellter Flechtschlauch ist aber nicht mit strammem Sitz auf ein Stranggut aufbringbar, da er nicht die Tendenz hat, sich nach dem Aufbringen auf das Stranggut wieder unter Durchmessereinengung zu strecken.

Der Erfindung liegt die Aufgabe zugrunde, einen Flechtschlauch zu schaffen, der mit wesentlich kürzeren Montagezeiten auf ein Stranggut aufgebracht werden kann. Darüber hinaus sollen nur einfache, unkritische Montagearbeiten erforderlich sein.

Zur Lösung dieser Aufgabe ist erfindungsgemäß vorgesehen, daß der Flechtschlauch mit einer losen, bereits beim Flechten des Schlauches miteingebrachten Seele als Montagehilfe versehen ist und daß die Seele eine solche Steifigkeit aufweist, daß die Endstücke der Seele durch Zurückstauchen des Flechtschlauches jeweils freilegbar sind. Der Flechtschlauch nach der Erfindung zeichnet sich durch eine sehr einfache Handhabbarkeit beim Aufbringen auf ein Stranggut aus. Denn er bietet die Möglichkeit, zunächst ein Ende der Seele, das mit wenigen Handgriffen durch einfaches Zurückstauchen des Flechtschlauches freilegbar ist, am Aufschubende des Stranggutes zu befestigen, wonach dann die Seele an ihrem anderen Ende mit einer Hand festgehalten und der Flechtschlauch mit der anderen Hand längs der Seele in Richtung auf das Stranggut gedrückt wird. Der in der Grundstellung zunächst gegen das Aufschubende des Stranggutes anstoßende Flechtschlauch wird hierbei gestaucht und erfährt eine zunehmende Aufweitung, die sich bis zu seinem gegen das Stranggut anstoßenden Ende fortsetzt, und bei einer bestimmten Aufweitung schnellt der gestauchte Flechtschlauch über das Stranggut. Nach vollständigem Aufschieben des Flechtschlauches wird dann die Seele vom Stranggut getrennt. Dieses Montageverfahren benötigt, wie umfangreiche praktische Erprobungen gezeigt haben, nur etwa 5 % der bisher benötigten Montagezeit und bietet darüber hinaus den Vorteil, daß der Stauzustand des Flechtschlauches zu keinem Zeitpunkt gegen ein vorzeitiges Strecken geschützt werden muß, da jegliche Schlauchstreckung bei der Erfindung sofort über das Stranggut gerichtet ist. Die mit der Einbringung der Selle beim Flechten des Schlauches verbundenen Kosten sind gegenüber den durch die verkürzte Montagezeit eingesparten Kosten vernachlässigbar gering.

Gemäß einer bevorzugten Ausführungsform der Erfindung ist die Seele durch Ziehen von Hand bleibend auslängbar. Hierdurch ist es möglich, bei einem auf Länge geschnittenen Flechtschlauch die eingeschlossene Seele über die Flechtschlauchlänge hinaus zu verlängern, beispielsweise derart, daß an jedem Flechtschlauchende die Seele ein Stück weit vorragt, womit der Flechtschlauch in besonders geeigneter Weise für ein Aufbringen auf das Stranggut vorbereitet ist.

Nach weiteren Merkmalen der Erfindung kann die Seele aus flexiblem Kunststoffmaterial, und zwar vorzugsweise aus einem Kunststoffschlauch, bestehen. Infolge ihrer Flexibilität kann die Seele sich jeder Krümmung des Flechtschlauches, z. B. beim Aufwickeln eines langen Flechtschlauches auf einer Trommel, anpassen. Durch die Ausbildung als Kunststoffschlauch läßt sich in besonders einfacher Weise eine einerseits ausreichend steife, andererseits aber auch bleibend längbare Seele erreichen.

Bei einem thermisch schneidbaren Flechtschlauch besteht die Seele der Erfindung zufolge ebenfalls aus einem thermisch schneidbaren Material. Aus Kunststoffäden bestehende Flechtschläuche werden üblicherweise thermisch geschnitten, so daß die einzelnen Geflechtfäden an den Schnittstellen miteinander verschmolzen werden und einem Ausfransen des Geflechtes vorgebeugt ist. Durch die Verwendung einer ebenfalls thermisch schneidbaren Seele können die üblichen thermischen Schneidgeräte verwendet werden.

Die Erfindung ist ferner auf ein Verfahren zum Aufbringen des erfindungsgemäßen Flechtschlauches auf ein Stranggut gerichtet, das mit einfachen Arbeitsvorgängen von Hand - oder auch maschinell - innerhalb kürzester Montagezeit durchführbar ist. Das Verfahren nach der Erfindung ist gekennzeichnet durch die Schritte,
a) daß an einem Flechtschlauchende ein Befestigungs-Stück der Seele freigelegt wird,
b) daß das freigelegte Befestigungs-Stück am Aufschubende des Stranggutes befestigt wird,
c) daß am anderen Flechtschlauchende ein Halte-Stück der Seele freigelegt wird,
d) und daß unter Festhalten des Halte-Stückes der Flechtschlauch in Richtung auf das Aufschubende des Stranggutes gestaucht und so weit aufgeweitet wird, bis der Flechtschlauch über das Stranggut schnellt.

Nach der Erfindung wird zweckmäßigerweise vor Stauchen des Flechtschlauches das Stranggut an seinem dem Aufschubende gegenüberliegenden Ende ortsfest fixiert und während des Stauchens werden der Flechtschlauch mit seiner Seele und das Stranggut in koaxialer Ausrichtung gehalten. Durch diese Maßnahmen wird die Reibung zwischen Flechtschlauch einerseits und Seele bzw. Stranggut andererseits auf ein Minimum gehalten und wird einem Ausbeulen, einem Verdrillen und einem Abknicken des Flechtschlauches vorgebeugt.

Bei dem Verfahren nach der Erfindung kann der Flechtschlauch erst nach Befestigen des Befestigungs-Stückes am Stranggut von einem Flechtschlauchvorrat abgelängt werden. Alternativ ist es aber auch möglich, den Flechtschlauch bereits vor dem Freilegen von Endstücken der Seele abzulängen. Wird bei dieser Alternative eine bleibend auslängbare Seele verwendet, empfiehlt es sich, zunächst an beiden Flechtschlauchenden ein überstehendes Seelen-Endstück zu schaffen und danach erst das Befestigungs-Endstück der Seele am Stranggut zu befestigen und nachfolgend den Flechtschlauch auf das Stranggut aufzudrücken. Bei dieser Arbeitsweise ist die Reihenfolge der vorgenannten Verfahrensschritte b) und c) vertauscht.

Zur Durchführung des Verfahrens ist nach weiteren Merkmalen der Erfindung ein Hilfsmittel vorgesehen, das gekennzeichnet ist durch ein Kuppelglied, an welchem in axialer Fluchtung sowohl die Seele als auch das Stranggut befestigbar sind und über das hinweg der Flechtschlauch drückbar ist. Das Kuppelglied ist zweckmäßigerweise konisch ausgebildet und verjüngt sich zur Anschlußseite der Seele hin. Das Kuppelglied kann mit lösbaren Klemmeinrichtungen für Seele und Stranggut versehen sein.

Die Erfindung wird im folgenden anhand der Zeichnung näher erläutert, in der zeigen:
- Fig. 1: einen Flechtschlauch nach der Erfindung, teils in Draufsicht, teils im Längsschnitt,
- Fig. 2: den Querschnitt des Flechtschlauches nach Fig. 1,
- Fig. 3 bis 11: verschiedene aufeinanderfolgende Montageschritte beim Aufbringen des Flechtschlauches auf ein Stranggut,
- Fig. 12 bis 14: drei zu den Fig. 4, 5 und 7 alternative Montagestufen bei Verwendung einer bleibend längbaren Seele,
- Fig. 15: ein Hilfsmittel zur Durchführung des Verfahrens und
- Fig. 16: das Hilfsmittel nach Fig. 15 in offener Stellung.

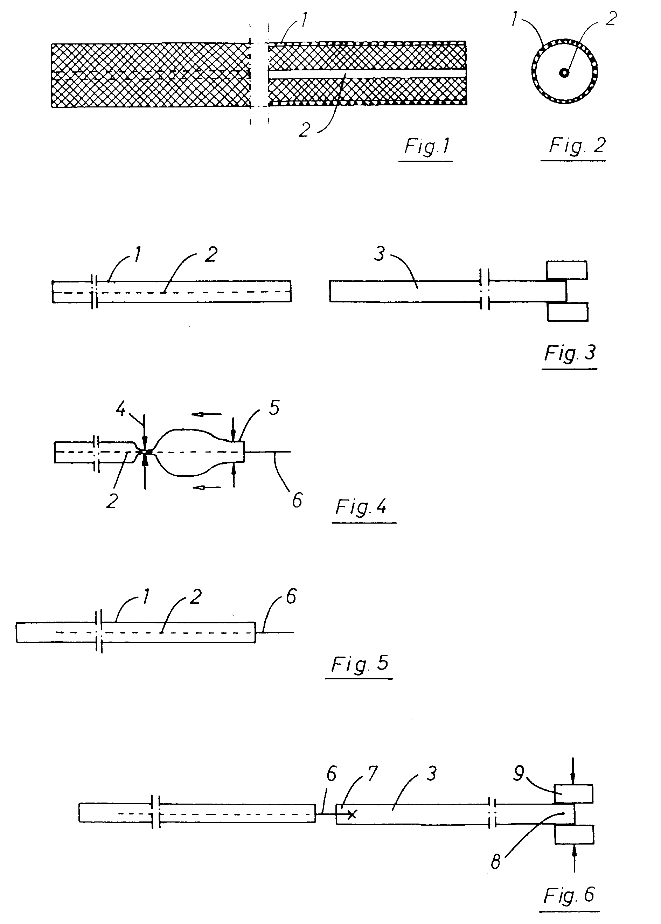

Die Fig. 1 und 2 zeigen ein abgelängtes Stück eines Flechtschlauches 1 nach der Erfindung, der aus einem üblichen Flechtschlauchmantel besteht, der mit einer losen, beim Flechten des Schlauches bereits miteingebrachten Seele 2 als Montagehilfe versehen ist. Das Flechtschlauchstück weist die Länge des zu ummantelnden Stranggutes 3 auf, die in der Praxis bis zu fünf Metern und mehr betragen kann. Der Mantel des Flechtschlauches 1 ist in üblicher Weise in einem erheblichen Umfange stauchbar, z. B. auf ein Viertel seiner Länge, wobei der Flechtschlauch 1 eine Aufweitung seines Durchmessers um das Zwei- bis Dreifache erfährt. Die Seele 2 besteht beim Ausführungsbeispiel aus einem verhältnismäßig dünnen, aber noch eine gewisse Steifigkeit aufweisenden Kunststoffschlauch.

Bei der nachfolgend anhand der Fig. 3 bis 11 beschriebenen Montage des Flechtschlauches 1 auf einem Stranggut 3 ist von einem Ausführungsbeispiel des Flechtschlauches nach Fig. 1 ausgegangen, bei dem die Seele 2 nicht längbar ist. Der auf entsprechende Länge geschnittene Flechtschlauch 1 (vgl. Fig. 3) wird in einem zurückliegenden Bereich 4 zunächst mit den Fingern einer Hand stramm auf die Seele 2 aufgedrückt, und nachfolgend wird ein freies Ende 5 des Schlauches 1 mit der anderen Hand gegriffen und einwärts zurückgestaucht, wodurch an diesem Schlauchende 5 ein Befestigungs-Stück 6 der Seele 2 freigelegt wird. Nach Loslassen der im zurückliegenden Bereich 4 zugreifenden Hand streckt sich der Schlauch 1 in die in Fig. 5 gezeigte Lage, in der die Seele 2 um die Länge des Befestigungs-Stückes 6 gegenüber dem Schlauch 1 verschoben ist. Anschließend wird das Befestigungs-Stück 6 am Aufschubende 7 des zu ummantelnden Stranggutes 3 befestigt (vgl. Fig. 6). Das Stranggut 3 ist an seinem dem Aufschubende 7 gegenüberliegenden Ende 8 mittels einer geeigneten Haltevorrichtung 9 ortsfest fixiert.

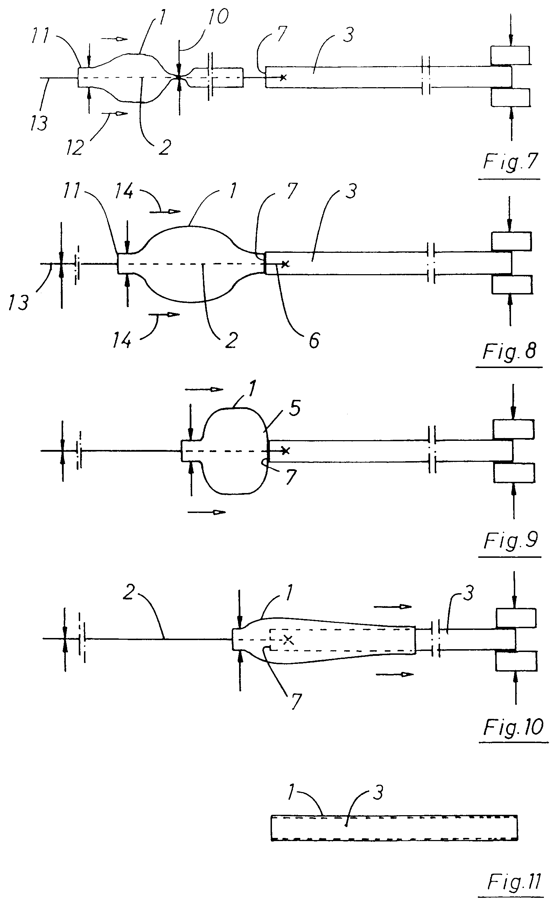

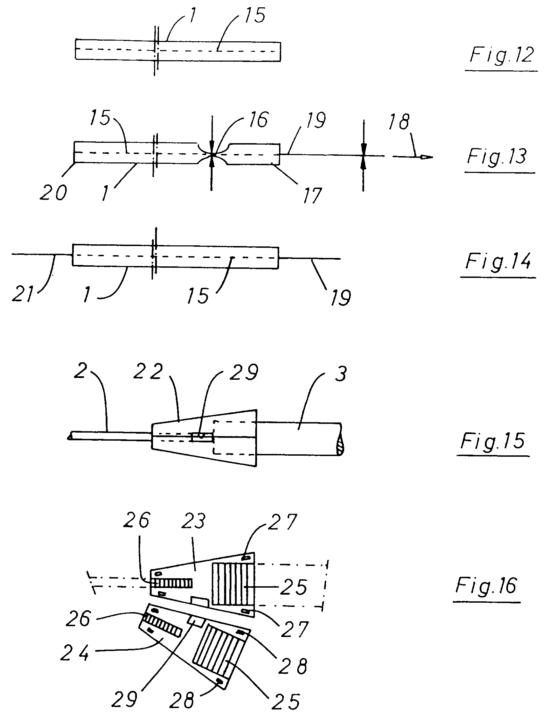

Anschließend wird der Schlauch 1 wiederum an einem zurückliegenden Bereich 10 mit einer Hand stramm auf die Seele 2 aufgedrückt. Mit der anderen Hand wird das rückwärtige Ende 11 des Schlauches 1 in Richtung der Pfeile 12 einwärts gestaucht und dabei ein Halte-Stück 13 der Seele 2 freigelegt, das zunächst durch Zusammendrücken des Schlauchendes 11 gesichert wird. Nach Loslassen der im Bereich 10 zugreifenden Hand schiebt sich der gestauchte Schlauch gegen das Aufschubende 7 des Stranggutes 3, an dem der dort noch nicht aufgeweitete Schlauch zunächst einen Anschlag findet. Sodann wird mit einer Hand das freigelegte Halte-Stück 13 der Seele 2 gehalten und nachfolgend der gesamte Flechtschlauch 1 von seinem rückwärtigen Ende 11 her mittels der zweiten Hand in Richtung der Pfeile 14 gegen das Aufschubende 7 des Stranggutes 3 geschoben (vgl. Fig. 8). Der Schlauch 1 wird hierbei so lange gestaucht und aufgeweitet, vgl. Fig. 9, bis er sich auch an seinem am Aufschubende 7 anliegenden Ende 5 über den Durchmesser des Stranggutes 3 hinaus aufweitet. In diesem Augenblick schnellt der gestauchte Schlauch 1 unter Streckung über das Aufschubende 7 hinweg auf das Stranggut 3, vgl. Fig. 10. Der Schlauch wird erforderlichenfalls dann noch von Hand auf dem Stranggut 3 in seiner Lage nachkorrigiert, bis er die Lage nach Fig. 11 erreicht, in der er das Stranggut 3 auf voller Länge ummantelt. Die Seele 2 wird nach Aufbringen vom Stranggut 3 gelöst.

Da der Innendurchmesser des Flechtschlauches 1 kleiner als der Außendurchmesser des Stranggutes 3 ist, sitzt der Schlauch 1 im montierten Zustand nach Fig. 11 stramm auf dem Stranggut 3.

Wie in den Fig. 8 bis 10 gezeigt ist, sind beim Aufschieben der Flechtschlauch 1 mit Seele 2 und das Stranggut 3 koaxial fluchtend gehalten.

Bei Verwendung einer bleibend längbaren Seele sind die vorbereitenden Verfahrensschritte zur Schaffung des freigelegten Befestigungs-Stückes und Halte-Stückes der Seele in besonders einfacher Weise ausführbar, wie nachfolgend anhand der Fig. 12 bis 14 veranschaulicht ist. Die Seele 15 ist zunächst längengleich mit dem Flechtschlauch 1 geschnitten, vgl. Fig. 12. Der Flechtschlauch 1 wird wiederum an einem zurückliegenden Bereich 16 mit einer Hand fest an die Seele 2 angeklemmt, danach das Schlauchende 17 mit der anderen Hand so weit gegen die Klemmstelle gestaucht, bis sich das Seelenende fassen läßt, wonach dann durch einen Zug in Richtung des Pfeiles 18 die Seele 15 so weit langgezogen wird, bis ein ausreichend langes Befestigungs-Stück 19 geschaffen ist, vgl. Fig. 13. Nachfolgend wird am gegenüberliegenden Schlauchende 20 in gleicher Weise die Seele 2 gefaßt und auf Überlänge gedehnt, so daß der Flechtschlauch in den in Fig. 14 gezeigten Vorbereitungszustand gebracht ist, bei dem die Seele mit einem Befestigungs-Stück 19 und einem Halte-Stück 21 den Flechtschlauch 1 überragt. Das Befestigungs-Stück 19 wird, wie in Fig. 6 gezeigt, wieder am Aufschubende 7 des Stranggutes 3 befestigt, und unter Festhaltung des Halte-Stückes 21 wird der Schlauch 1 dann in der in den Fig. 8, 9 und 10 beschriebenen Weise auf das Stranggut 3 aufgebracht.

Die Fig. 15 und 16 veranschaulichen ein Hilfsmittel zur Durchführung des vorbeschriebenen Verfahrens, speziell zur Befestigung der Seele 2 am Stranggut 3. Das Hilfsmittel ist als Kupplungsglied 22 ausgebildet und besteht aus den beiden Hälften 23, 24 eines längsgeteilten Konus, der sich zur Seite der Seele 2 hin verjüngt. Die Hälften 23, 24 sind jeweils mit verrippten Mulden 25, 26 zur klemmenden Einfassung von Seele 2 und Stranggut 3 versehen. Die Hälften 23, 24 weisen an ihren Ecken jeweils miteinander korrespondierende Schnappnasen 27 und Schnappausnehmungen 28 auf, die bei aufeinandergeschnappten Hälften 23, 24 die Festklemmung von Seele 2 und Stranggut 3 gewährleisten. Am Rand der Hälften 23, 24 ist eine schlitzförmige Ausnehmung 29 zum Einführen einer Schraubendreherklinge vorgesehen, mittels der die beiden Hälften 23, 24 voneinander abgehebelt werden können.

### Bezugszeichenliste

- 1: Flechtschlauch
- 2: Seele
- 3: Stranggut
- 4: Bereich
- 5: Schlauchende
- 6: Befestigungs-Stück
- 7: Aufschubende
- 8: Stranggut-Ende
- 9: Haltevorrichtung
- 10: Bereich
- 11: Flechtschlauchende
- 12: Pfeil
- 13: Halte-Stück
- 14: Pfeil
- 15: Seele
- 16: Bereich
- 17: Flechtschlauchende
- 18: Pfeil
- 19: Befestigungs-Stück
- 20: Flechtschlauchende
- 21: Halte-Stück
- 22: Kupplungsglied
- 23: Kupplungsglied-Hälfte
- 24: Kupplungsglied-Hälfte
- 25: verrippte Mulde
- 26: verrippte Mulde
- 27: Schnappnase
- 28: Schnappausnehmung
- 29: schlitzförmige Ausnehmung

## Patentansprüche

1. Flechtschlauch zur Ummantelung von Stranggut, z.B. Kabelbäumen, welcher durch Stauchen im Durchmesser elastisch aufweitbar ist, dadurch gekennzeichnet, daß der Flechtschlauch (1) mit einer losen, bereits beim Flechten des Schlauches miteingebrachten Seele (2) als Montagehilfe versehen ist und daß die Seele (2) eine solche Steifigkeit aufweist, daß die Endstücke (6, 13) der Seele (2) durch Zurückstauchen des Flechtschlauches (1) jeweils freilegbar sind.

2. Flechtschlauch nach Anspruch 1, dadurch gekennzeichnet, daß die Seele (15) durch Ziehen von Hand bleibend auslängbar ist.

3. Flechtschlauch nach den Ansprüchen 1 oder 2, dadurch gekennzeichnet, daß die Seele (2, 15) aus flexiblem Kunststoffmaterial besteht.

4. Flechtschlauch nach Anspruch 3, dadurch gekennzeichnet, daß die Seele (2, 15) aus einem Kunststoffschlauch besteht.

5. Flechtschlauch nach den Ansprüchen 3 oder 4, dadurch gekennzeichnet, daß bei einem thermisch schneidbaren Flechtschlauch (1) die Seele (2, 15) ebenfalls aus einem thermisch schneidbaren Material besteht.

6. Verfahren zum Aufbringen eines Flechtschlauches nach Anspruch 1 auf ein Stranggut, gekennzeichnet durch die Schritte,
a) daß an einem Flechtschlauchende (5) ein Befestigungs-Stück (6) der Seele (2) freigelegt wird,
b) daß das freigelegte Befestigungs-Stück (6) am Aufschubende (7) des Stranggutes (3) befestigt wird,
c) daß am anderen Flechtschlauchende (11) ein Halte-Stück (13) der Seele (2) freigelegt wird
d) und daß unter Festhalten des Halte-Stückes (13) der Flechtschlauch (1) in Richtung auf das Aufschubende (7) des Stranggutes (3) gestaucht und so weit aufgeweitet wird, bis der Flechtschlauch (1) über das Stranggut (3) schnellt.

7. Verfahren zum Aufbringen eines Flechtschlauches nach Anspruch 6, dadurch gekennzeichnet, daß vor Stauchen des Flechtschlauches (1) das Stranggut (3) an seinem dem Aufschubende (7) gegenüberliegenden Ende (8) ortsfest fixiert wird und daß während des Stauchens der Flechtschlauch (1) mit seiner Seele (2) und das Stranggut (3) in koaxialer Ausrichtung gehalten werden.

8. Verfahren zum Aufbringen eines Flechtschlauches nach den Ansprüchen 6 und 7, dadurch gekennzeichnet, daß der Flechtschlauch (1) erst nach Befestigen des Befestigungs-Stückes (6) am Stranggut (3) abgelängt wird.

9. Verfahren zum Aufbringen eines Flechtschlauches nach den Ansprüchen 6 und 7, dadurch gekennzeichnet, daß der Flechtschlauch (1) bereits vor dem Freilegen von Endstücken der Seele (2) abgelängt wird.

10. Verfahren zum Aufbringen eines Flechtschlauches nach Anspruch 9 , dadurch gekennzeichnet, daß zunächst das Befestigungs-Stück (19) und das Halte-Stück (21) durch Ziehen der Seele (15) bleibend ausgelängt und freigelegt werden und danach erst das Befestigungs-Stück (19) am Aufschubende (7) des Stranggutes (3) befestigt wird.

11. Hilfsmittel zur Durchführung des Verfahrens nach Anspruch 6, gekennzeichnet durch ein Kuppelglied (22), an dem in axialer Fluchtung sowohl die Seele (2) als auch das Stranggut (3) befestigbar sind und über das hinweg der Flechtschlauch (1) drückbar ist.

12. Hilfsmittel nach Anspruch 11, dadurch gekennzeichnet, daß das Kuppelglied (22) konisch ausgebildet ist und sich zur Anschlußseite für die Seele (2) verjüngt.

13. Hilfsmittel nach den Ansprüchen 11 und 12 , dadurch gekennzeichnet, daß das Kupplungsglied mit Klemmeinrichtungen (25, 26) für Seele (2) und Stranggut (3) versehen ist.
